**Europäisches Patentamt**

**European Patent Office**

**Office européen des brevets**

(11) Veröffentlichungsnummer : **0 067 941**
**B1**

(12) **EUROPÄISCHE PATENTSCHRIFT**

(45) Veröffentlichungstag der Patentschrift :
30.12.86

(21) Anmeldenummer : 82103498.0

(22) Anmeldetag : 24.04.82

(51) Int. Cl.⁴ : **E 21 D 21/00**, F 16 B 13/08

(54) Spreizdübel für die Verankerung in konisch nach innen erweitert hergestellten Bohrlöchern.

(30) Priorität : 24.06.81 DE 3124685

(43) Veröffentlichungstag der Anmeldung :
29.12.82 Patentblatt 82/52

(45) Bekanntmachung des Hinweises auf die Patenterteilung : 30.12.86 Patentblatt 86/52

(84) Benannte Vertragsstaaten :
AT BE CH FR GB IT LI NL SE

(56) Entgegenhaltungen :
DE-A- 1 907 171
FR-A- 2 346 591
FR-A- 2 378 200
US-A- 3 566 739

(73) Patentinhaber : fischer-werke Artur Fischer GmbH & Co. KG
Weinhalde 14-18
D-7244 Tumlingen/Waldachtal 3 (DE)

(72) Erfinder : Fischer, Artur, Dr.h.c.
Weinhalde 34
D-7244 Waldachtal 3/Tumlingen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Spreizdübel für die Verankerung in konisch nach innen erweitert hergestellten Bohrlöchern, bestehend aus einem am Bohrlochgrund sich abstützenden, einen Spreizkonus aufweisenden Stehbolzen mit Außengewinde, auf dessen Spreizkonus eine über einen Teil ihrer Länge mit Längsschlitzen versehene Spreizhülse auftreibbar ist.

Durch konisch erweiterte Bohrlöcher wie in der FR-A-2 346 591 ist es möglich, nahezu spreizdruckfreie Verankerungen durchzuführen, die aufgrund der erhöhten Aufspreizung des Befestigungselementes zusätzlich noch höhere Haltewerte erbringen. Die Verankerung der dafür verwendeten Dübel erfolgt mit einer Einschlaghülse. In Beton, insbesondere in armiertem Beton, wird das Bohrloch sehr häufig unrund bzw. gekrümmt, so daß durch Anecken der Stirnkante der Spreizhülse an Kiesel- oder Armierungsstäben ein Eintreiben des Dübels bis zum Bohrlochgrund sehr erschwert oder gelegentlich gar unmöglich ist. Ferner ist die Spreizhülse auf den Stehbolzen nur aufgesteckt, so daß beim Transport oder bei der Montage die Spreizhülse sich vom Stehbolzen lösen kann.

Der Erfindung liegt die Aufgabe zugrunde, den Spreizdübel so zu gestalten, daß auch bei unrunden und gekrümmten Bohrlöchern ein Eintreiben des Dübels möglich ist, und daß Stehbolzen und Spreizhülse eine unverlierbare Einheit bilden.

Erfindungsgemäß wird dies dadurch erreicht, daß der Durchmesser des zwischen dem Außengewinde und dem Spreizkonus liegenden Schaftes des Stehbolzens kleiner ist als der Gewindeaußendurchmesser, und daß der mit Längsschlitzen versehene Teil der mit einer dem Gewindeaußendurchmesser des Stehbolzens entsprechenden Innenbohrung ausgestatteten Spreizhülse an diesem Schaft eingedrückt ist. Durch die erfindungsgemäße Lösung kann der Spreizteil der Spreizhülse in der Weise zusammengedrückt werden, daß der Durchmesser der Spreizhülse im Bereich ihres einführseitigen Stirnendes reduziert ist. Es entsteht somit eine Anlaufschräge, die ein Verhaken im zylindrischen Teil des Bohrloches nahezu vollständig ausschließ. Da die Wandungsstärke der Spreizhülse nicht reduziert ist, verringert sich auch nicht der Haltewert des Dübels. Das Eindrücken des geschlitzten Spreizteiles der Spreizhülse an dem im Durchmesser reduzierten Schaft des Stehbolzens ergibt einen Formschluß, so daß der Stehbolzen und die Spreizhülse eine unverlierbare Einheit bilden.

In einer weiteren Ausgestaltung der Erfindung kann der Durchmesser des reduzierten Schaftes des Stehbolzens etwa dem Mittel zwischen dem Gewindeaußen- und dem Gewindekerndurchmesser entsprechen. Der Durchmesser des Schaftes liegt damit über dem Kerndurchmesser des Gewindes, so daß durch die Reduzierung keine Schwächung des Stehbolzens eintritt, dennoch aber die gewünschte Funktion erreicht ist. Der entsprechend dieser Maßangabe reduzierte Schaft kann gleichzeitig der Ausgangsdurchmesser für ein aufzurollendes metrisches Normgewinde sein.

In der Zeichnung ist ein Ausführungsbeispiel der Erfindung dargestellt. Es zeigen :

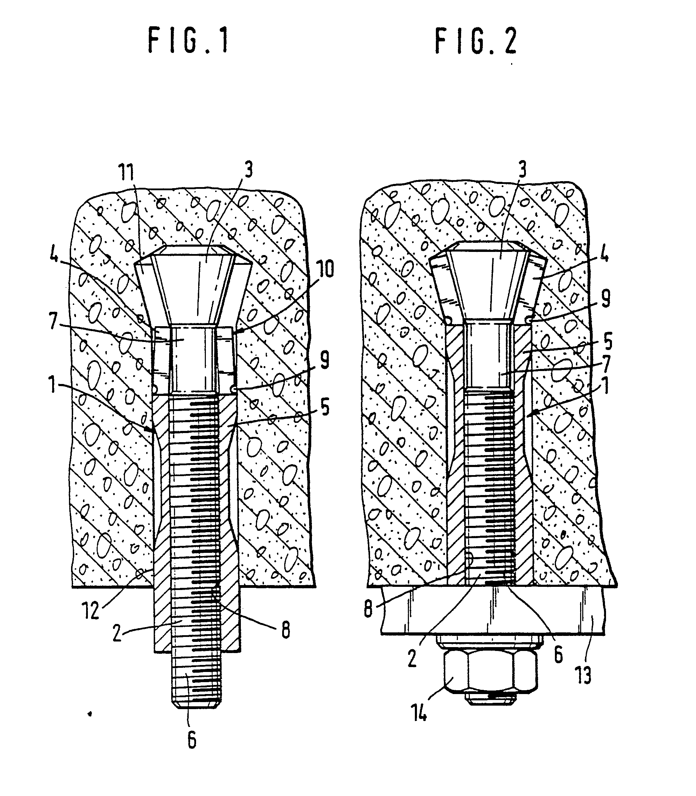

Figur 1 das in das Bohrloch eingeschobene noch unverankerte Befestigungselement

Figur 2 das verankerte Befestigungselement.

Der Spreizdübel 1 besteht aus dem Stehbolzen 2 mit kegelförmigem Spreizkonus 3 und der über einen Teil ihrer Länge mit Längsschlitzen 4 versehenen Spreizhülse 5. Der Stehbolzen 2 weist ein über einen Teil seiner Länge verlaufendes Außengewinde 6 auf, das in einem Abstand vom Spreizkonus 3 endet. Dieser zwischen dem Gewinde 6 und dem Spreizkonus 3 liegende Schaft 7 des Stehbolzens besitzt einen Durchmesser, der etwa zwischen dem Gewindeaußen- und dem Gewindekerndurchmesser liegt. Bei einem M 6 Außengewinde würde der Durchmesser des Schaftes 7 etwa 5,3 mm betragen. Über den Stehbolzen 2 ist die Spreizhülse 5 gestülpt, deren Innenbohrung 8 einen Durchmesser aufweist, der etwa dem Gewindeaußendurchmesser des Stehbolzens 2 entspricht. Der durch die umlaufende Nut 9 begrenzte Spreizteil der Spreizhülse 5 ist auf dem im Durchmesser reduzierten Schaft 7 des Stehbolzens bis zur Anlage der inneren Stirnkante eingedrückt. Damit ergibt sich eine Anlaufschräge 10, die das Einführen des Befestigungselementes in das mit einer Hinterschneidung 11 versehene Bohrloch 12 erleichtert.

Zur Verankerung des Spreizdübels 1 wird die Spreizhülse 5 mittels einer Einschlaghülse auf den Spreizkonus des am Bohrlochgrund sich abstützenden Stehbolzens 2 aufgetrieben. Dabei dringen die Spreizlamellen der Spreizhülse 5 in den zwischen Spreizkonus 3 und Hinterschneidung 11 des Bohrloches 12 gebildeten Spalt ein und bilden somit einen hohe Haltewerte bewirkenden Formschluß. Auf den die Mauerwerksoberfläche überragenden Stehbolzen 2 wird der zu befestigende Gegenstand 13 aufgesteckt und mittels einer Mutter 14 am Mauerwerk verspannt.

**Patentansprüche**

1. Spreizdübel für die Verankerung in konisch nach innen erweitert hergestellten Bohrlöchern, bestehend aus einem am Bohrlochgrund sich abstützenden, einen Spreizkonus (3) aufweisenden Stehbolzen (2) mit Außengewinde (6), auf dessen Spreizkonus (3) eine über einen Teil ihrer Länge mit Längsschlitzen (4) versehene Spreizhülse (5) auftreibbar ist, dadurch gekennzeichnet, daß der Durchmesser des zwischen dem Außengewinde (6) und dem Spreizkonus (3) liegenden Schaftes (7) des Stehbolzens (2) kleiner ist als der Gewindeaußendurchmesser, und daß der mit Längsschlitzen (4) versehene Teil der mit einer dem Gewindeaußendurchmesser des Stehbolzens (2) entsprechenden Innenbohrung ausgestatteten Spreizhülse (5) an diesem Schaft (7) eingedrückt ist.

2. Spreizdübel nach Anspruch 1, dadurch gekennzeichnet, daß der Durchmesser des reduzierten Schaftes (7) des Stehbolzens (2) etwa dem Mittel zwischen dem Gewindeaußen- und dem Gewindekerndurchmesser entspricht.

## Claims

1. Expansible anchor for anchoring in boreholes that are so prepared that, in an inward direction, they flare, consisting of a stay bolt (2) that is supported at the base of the borehole and has an external thread (6) and an expander cone (3), onto the expander cone (3) of which an expansible sleeve (5) that is provided along, part of its length with longitudinal slots (4) can be driven, characterised in that the diameter of that portion of the shank (7) of the stay bolt (2) lying between the external thread (6) and the expander cone (3) is smaller than the outer diameter of the thread, and that the portion of the expansible sleeve (5) that is provided with longitudinal slots (4), the sleeve being provided with an internal bore corresponding to the outer diameter of the thread of the stay bolt (2), is pressed in against that shank portion (7).

2. Expansible anchor according to claim 1, characterised in that the diameter of the reduced-diameter shank portion (7) of the stay bolt (2) corresponds approximately to the mean between the outer diameter of the thread and the core diameter of the thread.

## Revendications

1. Cheville expansible destinée à être ancrée dans des trous évasés en cône vers l'intérieur, composée d'un goujon (2) à filetage (6), qui s'applique contre le fond du trou et qui comporte un cône de dilatation (3) sur lequel peut être repoussé un manchon expansible (5) comportant sur une partie de sa longueur des fentes longitudinales (4), caractérisée en ce que le diamètre du fût (7) du goujon (2), entre le filetage (6) et le cône (3), est inférieur au diamètre extérieur de ce filetage (6) et en ce que la partie portant les fentes longitudinales (4) de ce manchon (5), dont l'alésage correspond à ce diamètre extérieur du goujon (2), est repoussée sur ce fût (7).

2. Cheville expansible selon la revendication 1, caractérisée en ce que le diamètre réduit du fût (7) du goujon (2) correspond à peu près à la moyenne entre le diamètre extérieur du filetage et le diamètre du fond des filets.

FIG.1          FIG.2